# EUROPEAN PATENT APPLICATION

(11) **EP 4 794 049 A1**
(43) Date of publication of application: **19.08.2026**
(21) Application number: 25775729.4
(22) Date of filing: 10.03.2025
(51) Int. Cl.: H01M 10/0587

(54) **SECONDARY BATTERY AND ELECTRONIC DEVICE**

(30) Priority: 25.03.2024 CN 202410346291
(71) Applicant: Ningde Amperex Technology Limited, Ningde, Fujian 352100 (CN)
(72) Inventor: WANG, Chen, Ningde, Fujian 352100 (CN)
(74) Representative: Dehns Germany Partnerschaft mbB
(86) International application number: PCT/CN2025/081630
(87) International publication number: WO 2025/201022

(57) **Abstract**

This application discloses a secondary battery and an electronic device. The secondary battery includes a packaging bag, an electrode assembly, a first tab, a first insulation tape, and a second insulation tape. The electrode assembly is accommodated in the packaging bag. The first tab is electrically connected to the electrode assembly and protrudes out of the packaging bag along a first direction. The electrode assembly assumes a jelly-roll structure and includes a first end surface, a first side surface, a first curved surface, and a second side surface. The first side surface, the first curved surface, and the second side surface are disposed around a periphery of the first end surface. The first insulation tape includes a tape body and a first protruding portion. The tape body is bonded to the first side surface, the first curved surface, and the second side surface separately. The first protruding portion exceeds a negative electrode plate of the electrode assembly along the first direction. The first protruding portion includes a first section and a second section. The second insulation tape is bonded to the first end surface, the first section, and the second section separately. In this way, this application can improve the hot box test pass rate of the secondary battery.

## Description

This application claims priority to Chinese Patent Application No. 202410346291.3, filed with China National Intellectual Property Administration on March 25, 2024 and entitled "SECONDARY BATTERY AND ELECTRONIC DEVICE", which is incorporated herein by reference in its entirety.

### TECHNICAL FIELD

This application relates to the technical field of batteries, and in particular, to a secondary battery and an electronic device.

### BACKGROUND

Secondary batteries have been widely used in the fields such as consumer electronics, electric vehicles, electric two-wheelers, and electric tools. With the increase of the market demand, users have put forward higher requirements on the reliability of secondary batteries in use.

### SUMMARY

An objective of this application is to provide a secondary battery and an electronic device to improve reliability of the secondary battery in use.

According to a first aspect of this application, a secondary battery is provided. The secondary battery includes a packaging bag, an electrode assembly, a first tab, a first insulation tape, and a second insulation tape. The electrode assembly is accommodated in the packaging bag. The first tab is electrically connected to the electrode assembly and protrudes out of the packaging bag along a first direction. The electrode assembly assumes a jelly-roll structure and includes a first end surface, a first side surface, a first curved surface, and a second side surface. The first side surface, the first curved surface, and the second side surface are disposed around a periphery of the first end surface. The first insulation tape includes a tape body and a first protruding portion. The tape body is bonded to the first side surface, the first curved surface, and the second side surface separately. The first protruding portion exceeds a negative electrode plate of the electrode assembly along the first direction. The first protruding portion includes a first section and a second section. The first section and the second section are disposed opposite to each other along a second direction. The second direction is perpendicular to the first direction. The second insulation tape is bonded to the first end surface, the first section, and the second section separately.

In the secondary battery involved in this application, the positive electrode plate, the negative electrode plate, and a separator are bonded together by the second insulation tape and the first insulation tape to form an integral structure, thereby improving the wholeness of the electrode assembly, and reducing the risk that at least one of the positive electrode plate, the negative electrode plate, or the separator is dislocated for lack of constraint under vibration or impact conditions.

On this basis, under a fixing action of the second insulation tape, both the first section and the second section can be bent toward an inner turn of the electrode assembly, thereby driving the separator to fold inward toward a part of an end surface of the first curved surface on one side in the first direction, and in turn, and forming a blocking structure that blocks a part of gas from passing through. In this way, during a hot box test of the secondary battery, a heat-generating gas can rush out of the packaging bag in a centralized manner from a position close to the first tab, thereby improving the hot box test pass rate of the secondary battery.

In one or more optional embodiments, the second insulation tape includes a first part, a second part, and a third part. The first part is bonded to the first end surface, the first section, and the second section separately. The second part is connected to an edge of the first part on one side along the second direction and is bonded to the first side surface and the tape body separately. The third part is connected to an edge of the first part on another side along the second direction and is bonded to the second side surface and the tape body separately. In the second direction, a projection of the second part and a projection of the tape body overlap in a first overlap region on the first side surface. A projection of the third part and a projection of the tape body overlap in a second overlap region on the second side surface.

An overlap region between the second insulation tape and the first insulation tape exists on both the first side surface and the second side surface, indicating that the thickness of the overlap region in the second direction is greater than the thickness of the part around the first curved surface in the second direction. Therefore, in a subsequent hot-pressing process, the force borne in the part around the first curved surface is less than the force borne in the overlap region. Therefore, the spacing between adjacent electrode plates in the part around the first curved surface is slightly greater than the spacing between adjacent electrode plates in the overlap region. Therefore, the first curved surface is more effectively infiltrated by an electrolyte solution, thereby alleviating the phenomenon that the part around the first curved surface is prone to lithium plating due to insufficiency of the electrolyte solution.

In one or more optional embodiments, 0.2 < W₁/W ≤ 0.7, and 1 < W₂/W_{tab} ≤ 3. With W₁ and W₂ being controlled to fall within such numerical ranges, this application not only improves the hot box test pass rate of the secondary battery, but also alleviates the lithium plating of the secondary battery. A width of the electrode assembly in a third direction is W mm; a width of the first insulation tape in the third direction is W₁ mm; a width of the first tab in the third direction is W_{tab} mm; and a width of the second insulation tape in the third direction is W₂ mm, where the third direction, the second direction, and the first direction are perpendicular to each other.

In one or more optional embodiments, 0.3 ≤ W₁/W ≤ 0.5, thereby achieving a high hot box test pass rate of the secondary battery and a high no-lithium-plating probability of the negative electrode plate.

In one or more optional embodiments, 1.5 ≤ W₂/W_{tab} ≤ 2.5, thereby achieving a high hot box test pass rate of the secondary battery and a high no-lithium-plating probability of the negative electrode plate.

In one or more optional embodiments, 0 < W₃/W₁ ≤ 0.5, and 0.8 < W₄/W₃ ≤ 1.1; a width of the first overlap region in the third direction is W₃ mm; and a width of the second overlap region in the third direction is W₄ mm. In this way, the areas of both the first overlap region and the second overlap region fall within specified ranges. In this case, the first insulation tape and the second insulation tape can maintain relatively high bonding strength to keep effectiveness of the function of the blocking structure formed by enclosure of the second insulation tape, the first section, and the second section, and can also alleviate an interface problem generated in a subsequent hot-pressing process due to an area difference between the first overlap region and the second overlap region.

In one or more optional embodiments, the packaging bag is made of an aluminum laminated film. The electrode assembly includes the negative electrode plate and a positive electrode plate that are stacked and wound. Along a winding direction of the electrode assembly, the positive electrode plate includes a winding termination end, and the negative electrode plate includes an excess portion that exceeds the winding termination end. Both the excess portion and the winding termination end are located on one side of the electrode assembly in the second direction, and the excess portion and the winding termination end are arranged on two adjacent electrode plate layers. Along the second direction, a projection of the excess portion falls within a projection of the first insulation tape. With such a design, the first insulation tape can play a role in binding up the electrode assembly to maintain the structural integrity and stability of the jelly-roll structure. In addition, because the excess portion of the negative electrode plate still expose a die-cut surface of the negative current collector to the outside, the first insulation tape disposed between the excess portion and the packaging bag can also reduce the probability that the burrs of the die-cut surface pierce the separator and directly contact the packaging bag made of an aluminum laminated film under some working conditions.

In one or more optional embodiments, 1 < L₂/L₁ ≤ 1.1. A length of the negative electrode plate in the first direction is L₁ mm; and a length of the first insulation tape in the first direction is L₂ mm. Controlling L₂ to fall within this value range can alleviate the corrosion of an aluminum layer in the packaging bag caused by the contact between the negative electrode plate and the packaging bag, and can also reduce the phenomena that the first protruding portion extends into a seal region of the packaging bag due to an excessive extension length.

In one or more optional embodiments, the first insulation tape and the second insulation tape each independently include a substrate layer and an adhesive layer provided on the substrate layer. The substrate layer includes at least one of polyethylene terephthalate, polyimide, or polypropylene. The adhesive layer includes at least one of a rubber system, acrylic acid, or styrene-isoprene-styrene.

In one or more optional embodiments, the substrate layer is made of polyethylene terephthalate; and/or the adhesive layer is made of styrene-isoprene-styrene.

According to a second aspect of this application, an electrical device is provided. The electrical device includes the secondary battery disclosed above.

Additional aspects and advantages of some embodiments of this application will be partly described or illustrated herein later or expounded through implementation of an embodiment of this application.

### BRIEF DESCRIPTION OF DRAWINGS

To describe the technical solutions in the specific embodiments of this application or the prior art more clearly, the following outlines the drawings that need to be used in the descriptions of the specific embodiments of this application or the prior art. In all the drawings, similar elements or parts are generally identified by similar reference numerals. The elements or parts in the drawings are not necessarily drawn to scale.
FIG. 1 is a schematic structural diagram of a secondary battery according to an embodiment of this application;
FIG. 2 is a schematic structural diagram of another secondary battery according to an embodiment of this application;
FIG. 3 is a schematic structural diagram of still another secondary battery according to an embodiment of this application;
FIG. 4 is a structural perspective view of the secondary battery shown in FIG. 1 without a packaging bag;
FIG. 5 is a top view of an electrode assembly in the secondary battery shown in FIG. 1;
FIG. 6 is a top view of another electrode assembly in the secondary battery shown in FIG. 1;
FIG. 7 is a schematic structural diagram of the secondary battery shown in FIG. 1 without a packaging bag, viewed from the front of a first side surface; and
FIG. 8 is a schematic structural diagram of the secondary battery shown in FIG. 1 without a packaging bag, viewed from the front of a second side surface.

List of reference numerals:
10. packaging bag;
20. electrode assembly; 201. first end surface; 202. second end surface; 203. peripheral surface; 2031. first side surface; 2032. first curved surface; 2033. second side surface; 2034. second curved surface; 21. first separator; 22. negative electrode plate; 221. excess portion; 23. second separator; 24. positive electrode plate; 24a. winding termination end;
31. first tab; 32. second tab;
41. first insulation tape; 411. tape body; 412. first protruding portion; 412a. first section; 412b. second section; 413. second protruding portion;
42. second insulation tape; 421. first part; 422. second part; 423. third part;
431. first overlap region; 432. second overlap region;
X. first direction; Y. second direction; Z. third direction; S. winding direction.

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms such as "mount" and "connect" need to be understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

The term "parallel" is a description of an ideal state between two components. In an actual production or use state, one component may be approximately parallel to another component. For example, numerically, the term "parallel" may represent an angle of 180°±10° between two straight lines, or a dihedral angle of 180°±10° between two planes, or an angle of 180°±10° between a straight line and a plane. The two components described as "parallel" may be not absolute straight lines or planes, but may be roughly straight lines or planes. An object is considered to be a "straight line" or "plane" if the overall extension direction of the object is a straight line or plane as viewed from a macro perspective.

To the extent that no mutual conflict occurs, the technical features described below in different embodiments of this application may be combined with each other.

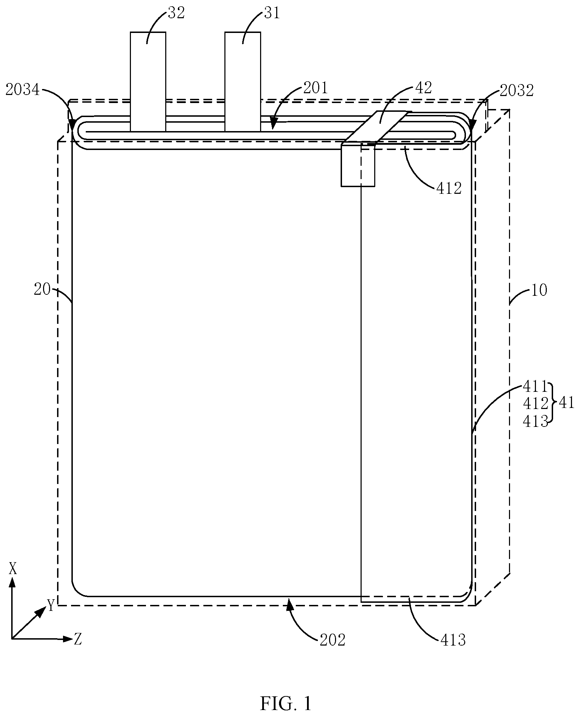

For ease of description, as shown in FIG. 1 to FIG. 8, a three-dimensional rectangular coordinate system is established in which the length direction of the secondary battery is a first direction X, the thickness direction of the secondary battery is a second direction Y, and the width direction of the secondary battery is a third direction Z.

In some embodiments, the first direction X is parallel to a direction in which the first end surface 201 and the second end surface 202 in an electrode assembly 20 to be described below in detail are disposed opposite to each other. In addition, the first direction X is also parallel to a protruding direction of the first tab 31 to be described below in detail.

In some embodiments, the second direction Y is parallel to a direction in which the first side surface 2031 and the second side surface 2033 in the electrode assembly 20 to be described below in detail are disposed opposite to each other. In addition, the second direction Y is also parallel to a stacking direction of the electrode plates in the electrode assembly 20 to be described below in detail.

In some embodiments, the third direction Z is parallel to a direction in which the first curved surface 2032 and the second curved surface 2034 in the electrode assembly 20 to be described below in detail are disposed opposite to each other. In addition, the third direction Z is also parallel to a direction in which the first tab 31 and the second tab 32 to be described below in detail are disposed opposite to each other.

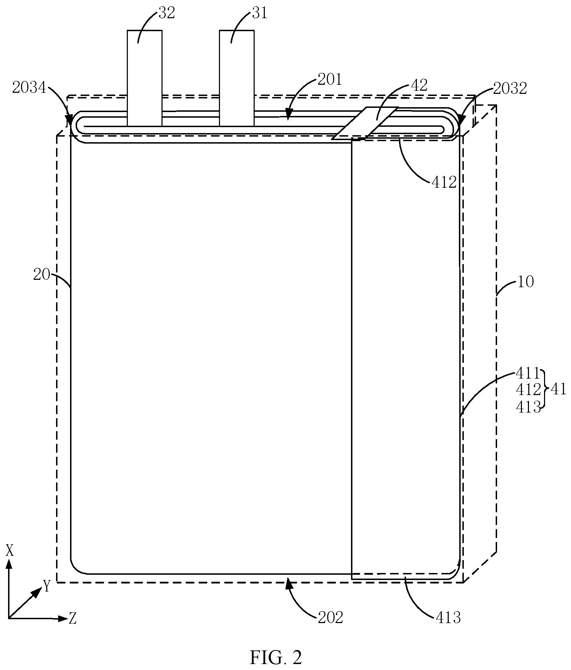

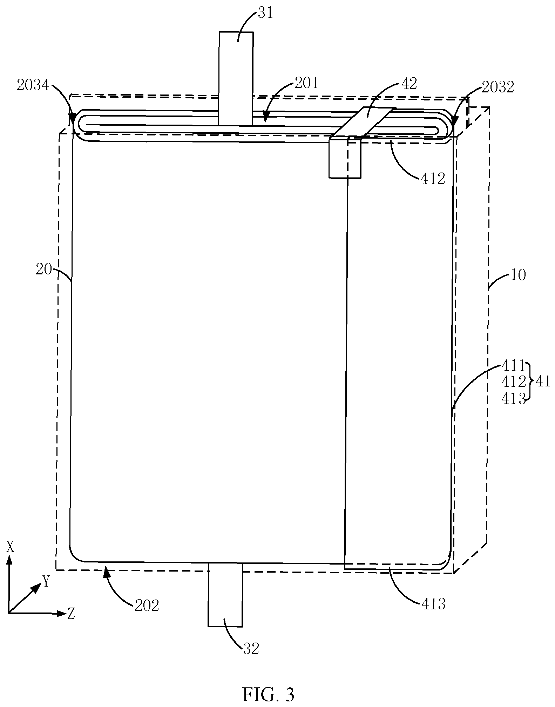

FIG. 1 is a schematic structural diagram of a secondary battery according to an embodiment of this application; FIG. 2 is a schematic structural diagram of another secondary battery according to an embodiment of this application; and FIG. 3 is a schematic structural diagram of still another secondary battery according to an embodiment of this application. First, referring to any one of FIG. 1 to FIG. 3, the secondary battery includes: a packaging bag 10; and an electrode assembly 20, disposed in the packaging bag 10. One end of the first tab 31 and one end of the second tab 32 are both electrically connected, in the packaging bag 10, to the electrode assembly 20. Another end of the first tab 31 and another end of the second tab 32 both extend out of the packaging bag 10 to become electrically connected to an external device to implement input or output of electrical energy.

Regarding the packaging bag 10, in some embodiments, the packaging bag 10 is made of a packaging film. The packaging film includes a first polymer layer (not shown in the drawing), a metal layer (not shown in the drawing), and a second polymer layer (not shown in the drawing) arranged in sequence from inside outward. The first polymer layer melts at a preset temperature, and is adhesive to facilitate sealing of the packaging bag 10. The metal layer is configured to reduce the probability that moisture penetrates into the packaging bag 10 and induces gas-liquid exchange with an electrolyte solution. The second polymer layer can reduce the probability that air penetrates into the packaging bag 10, and can also improve the deformation ability of the packaging bag 10.

As an example, the first polymer layer may be made of a polypropylene material. In this way, the first polymer layer is hardly dissolvable or swellable in an electrolyte solution, thereby reducing the risk of corrosion of a metal layer adjacent to the first polymer layer.

As an example, the metal layer may be made of an aluminum material. The aluminum material reacts with oxygen in the air to form a dense oxide film to prevent moisture from penetrating into the interior of the packaging bag 10.

As an example, the second polymer layer may be made of a nylon material.

Definitely, the material the packaging bag 10 is diversified, and is not limited to the above-mentioned packaging film.

The electrode assembly 20 includes: a positive electrode plate 24, a negative electrode plate 22, and a separator separating the positive electrode plate 24 from the negative electrode plate 22. In specific implementation, the number of the positive electrode plate 24 and the number of the negative electrode plate 22 are one, and both the positive electrode plate 24 and the negative electrode plate 22 are ribbon-shaped structures. The positive electrode plate 24, the separator, and the negative electrode plate 22 are stacked in sequence and wound more than two turns to form a jelly-roll structure. One of the positive electrode plate 24 or the negative electrode plate 22 is electrically connected to the first tab 31, and the other is electrically connected to the second tab 32. For ease of description, the following embodiments are all illustrated by an example in which the positive electrode plate 24 is electrically connected to the first tab 31 and the negative electrode plate 22 is electrically connected to the second tab 32.

The positive electrode plate 24 includes a positive current collector (not shown in the drawing) and a positive active material layer (not shown in the drawing) applied on at least one surface of the positive current collector.

The positive current collector contains at least one of Ni, Ti, Cu, Ag, Au, Pt, Fe, Al, or a combination thereof.

The positive active material layer includes a positive active material (not shown in the drawing). The positive active material includes, but is not limited to, one or more of lithium cobalt oxide, lithium nickel cobalt manganese oxide, lithium nickel cobalt aluminum oxide, lithium manganese oxide, lithium nickel oxide, lithium manganese iron phosphate, lithium vanadium phosphate, lithium iron phosphate, or a lithium-rich manganese-based material.

The negative electrode plate 22 includes a negative current collector (not shown in the drawing) and a negative active material layer (not shown in the drawing) applied on at least one surface of the negative current collector.

The negative current collector contains at least one of Ni, Ti, Cu, Ag, Au, Pt, Fe, Al, or a combination thereof.

The negative active material layer includes a negative active material (not shown in the drawing). The negative active material may be at least one selected from a graphite material, an alloy material, lithium metal, or an alloy thereof. The graphite material may be at least one selected from artificial graphite, natural graphite, soft carbon, hard carbon, graphene, or mesocarbon microbeads. The alloy material may be at least one selected from a silicon-based material, a tin-based material, or titanium sulfide.

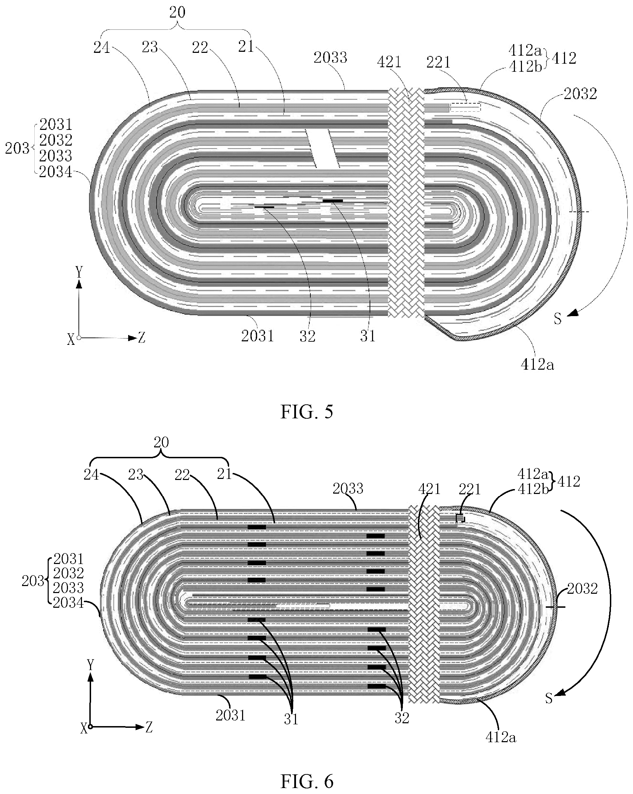

Referring to FIG. 5 or FIG. 6, and also referring to any one of FIG. 1 to FIG. 3, in some embodiments, the electrode assembly 20 is roughly a flat jelly-roll structure and includes: a first end surface 201, a second end surface 202, and a peripheral surface 203. The first end surface 201 is located on one side of the jelly-roll structure along a first direction X. The second end surface 202 is located on another side of the jelly-roll structure along the first direction X. The peripheral surface 203 is located between the first end surface 201 and the second end surface 202, and is connected to the periphery of the first end surface 201 and the periphery of the second end surface 202 separately. The peripheral surface 203 includes a first side surface 2031, a first curved surface 2032, a second side surface 2033, and a second curved surface 2034. The first side surface 2031, the first curved surface 2032, the second side surface 2033, and the second curved surface 2034 are sequentially arranged around the circumference of the jelly-roll structure along a direction opposite to the winding direction S of the jelly-roll structure. In addition, the first side surface 2031 and the second side surface 2033 are disposed opposite to each other along the second direction Y. The first curved surface 2032 and the second curved surface 2034 are disposed opposite to each other along the third direction Z. The first end surface 201 may be formed of end surfaces of the positive electrode plate 24, the negative electrode plate 22, and the separator on one side in the first direction X. The second end surface 202 may be formed of end surfaces of the positive electrode plate 24, the negative electrode plate 22, and the separator on the other side in the first direction X.

It is worth mentioning that, to ensure the safety and reliability of the secondary battery, the electrode assembly 20 in each embodiment of this application needs to meet the following conditions: the width of the separator in the first direction X is greater than the width of the negative electrode plate 22 in the first direction X, and the width of the negative electrode plate 22 in the first direction X is greater than the width of the positive electrode plate 24 in the first direction X. In this way, the separator can provide an additional safety margin to reduce the probability of a short circuit caused by direct contact between the positive electrode plate 24 and the negative electrode plate 22.

In some embodiments, the first end surface 201 or the second end surface 202 may be a flat surface, a curved surface, or an irregular surface.

For the first tab 31, in some embodiments, the first tab 31 includes a first metal strap (not shown in the drawing) and a first tab adhesive (not shown in the drawing). One end of the first metal strap is electrically connected, in the packaging bag 10, to the positive electrode plate 24. Another end of the first metal strap extends out of the packaging bag 10. The first tab adhesive is disposed around the periphery of the first metal strap and sandwiched between the first metal strap and the packaging bag 10.

Understandably, the method of connection between the first tab 31 and the positive electrode plate 24 is not particularly limited in any embodiment of this application. For example, in some embodiments, the first tab 31 and the positive electrode plate 24 are independent components, and the first metal strap may be fixed to the positive electrode plate 24 by welding, riveting, or conductive adhesive bonding. For another example, in some other embodiments, the first tab 31 and the positive current collector are different parts of the same component. The first tab 31 and the positive current collector may be obtained by die-cutting a sheet of foil, and then an active material layer is applied onto at least one surface of the positive current collector to form a positive electrode plate 24.

For the second tab 32, in some embodiments, the second tab 32 includes a second metal strap (not shown in the drawing) and a second tab adhesive (not shown in the drawing). One end of the second metal strap is electrically connected, in the packaging bag 10, to the negative electrode plate 22. Another end of the second metal strap extends out of the packaging bag 10. The second tab adhesive is disposed around the periphery of the second metal strap and sandwiched between the second metal strap and the packaging bag 10.

Understandably, the method of connection between the second tab 32 and the negative electrode plate 22 is not particularly limited in any embodiment of this application. The method of connection between the second tab 32 and the negative electrode plate 22 is similar to the above-mentioned method of connection between the first tab 31 and the positive electrode plate 24. Therefore, the relevant content can be learned by referring to the configuration between first tab 31 and the positive electrode plate 24, the details of which are omitted here.

For ease of description, an example is given here in which both the first tab 31 and the second tab 32 extend out from the same side of the electrode assembly 20. As can also be seen from FIG. 1, FIG. 2, and FIG. 4, in some embodiments, the first tab 31 and the second tab 32 are spaced apart in the third direction Z, thereby improving the space efficiency of the secondary battery. Specifically, the other end of the first metal strap and the other end of the second metal strap both extend out of the packaging bag 10 from the first end surface 201.

Definitely, the arrangement of the first tab 31 and the second tab 32 may also be adaptively adjusted according to actual use requirements. As shown in FIG. 3, in some other embodiments, the first tab 31 and the second tab 32 each extend out from two opposite sides of the packaging bag 10 respectively along the first direction X. Specifically, the other end of the first metal strap extends out of the packaging bag 10 from the first end surface 201, and the other end of the second metal strap extends out of the packaging bag 10 from the second end surface 202.

Further, the first tab 31 is closer to the second curved surface 2034 than the first curved surface 2032, and the second tab 32 is closer to the second curved surface 2034 than the first curved surface 2032.

As shown in any one of FIG. 1 to FIG. 4, in some embodiments, the secondary battery includes a first insulation tape 41. The first insulation tape 41 is roughly U-shaped when viewed from the first direction X, and includes a tape body 411 and a first protruding portion 412 integrally connected to the tape body 411. The tape body 411 is bonded to the first side surface 2031, the first curved surface 2032, and the second side surface 2033 separately. The first protruding portion 412 exceeds an end surface of the negative electrode plate 22 on one side in the first direction X.

The benefits of such a configuration may be reflected in the following two aspects. First, because the first insulation tape 41 is of some mechanical strength, the part, extending out of the first end surface 201, of the first protruding portion 412 is bent under a force, thereby preventing the end surface of the negative electrode plate 22 on one side in the first direction X from directly contacting the packaging bag 10 made of an aluminum laminated film, and alleviating the phenomenon that the negative electrode plate 22 contacts the packaging bag 10 and corrodes the aluminum layer in the packaging bag 10. Second, with the first insulation tape 41 disposed additionally, the thickness of the part, provided with the first insulation tape 41, of the electrode assembly 20 can be balanced with the thickness of the part of the electrode assembly 20 at a joint between the first tab 31 and the electrode assembly 20, thereby alleviating the interface problem of the electrode assembly 20 caused by uneven stress in a subsequent hot-pressing process.

Further, the first insulation tape 41 includes a second protruding portion 413 connected to the tape body 411. The second protruding portion 413 extends out of the second end surface 202 along the first direction X. Likewise, this arrangement also alleviates the phenomenon that the negative electrode plate 22 contacts the packaging bag 10 to corrode the aluminum layer in the packaging bag 10.

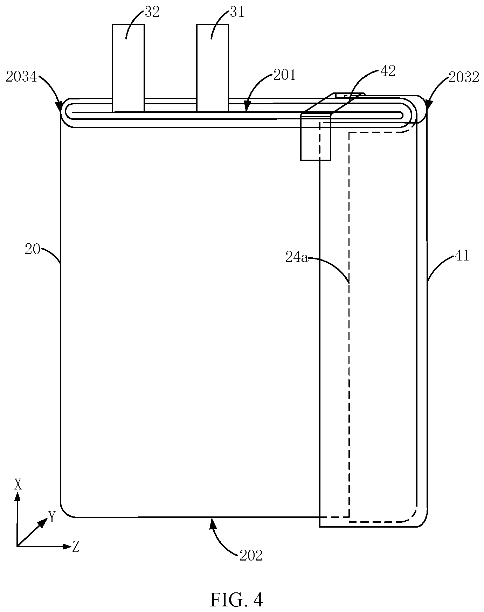

Referring to FIG. 5 or FIG. 6, and also referring to the example shown in FIG. 4, in some embodiments, a projection of the excess portion 221 fully falls within a projection of the first insulation tape 41 in the second direction Y.

For ease of description, an example is given here in which the jelly-roll structure includes a first separator 21, a negative electrode plate 22, a second separator 23, and a positive electrode plate 24. The first separator 21, the negative electrode plate 22, the second separator 23, and the positive electrode plate 24 are sequentially stacked and wound to form the above-mentioned flat jelly-roll structure. In the structure, along the winding direction S of the jelly-roll structure, the positive electrode plate 24 includes a winding termination end 24a, and the negative electrode plate 22 includes an excess portion 221 that exceeds the winding termination end 24a. The first insulation tape 41 is bonded to the winding termination end 24a and the excess portion 221 separately. In the second direction Y, a projection of the excess portion 221 falls within a projection of the first insulation tape 41. With such a design, the first insulation tape 41 can play a role in binding up the electrode assembly 20 to maintain the structural integrity and stability of the jelly-roll structure. In addition, because the excess portion 221 of the negative electrode plate 22 still expose a die-cut surface of the negative current collector to the outside, the first insulation tape 41 disposed between the excess portion 221 and the packaging bag 10 can also reduce the probability that the burrs of the die-cut surface pierce the separator and directly contact the packaging bag 10 made of an aluminum laminated film under some working conditions.

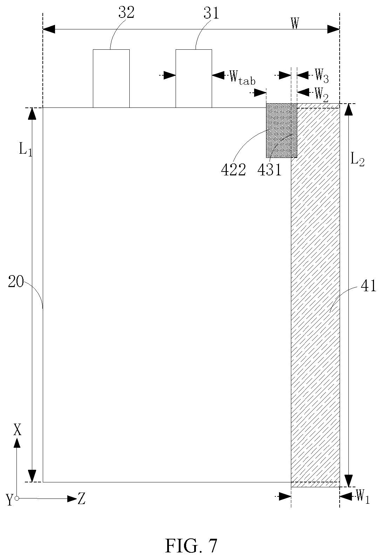

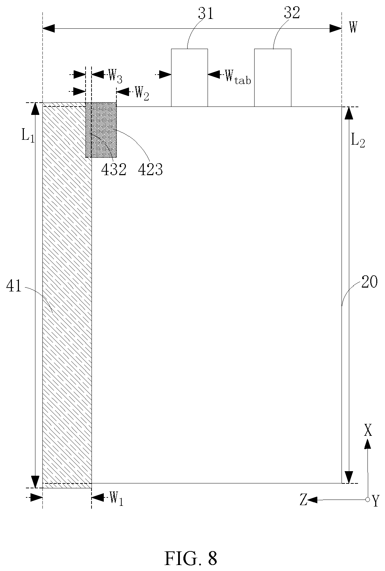

Still referring to FIG. 7 or FIG. 8, in some embodiments, 1 < L₂/L₁ ≤ 1.1. The length of the negative electrode plate 22 in the first direction X is L₁ mm; and the length of the first insulation tape 41 in the first direction X is L₂ mm. Controlling L₂ to fall within this value range can alleviate the corrosion of the aluminum layer in the packaging bag 10 caused by the contact between the negative electrode plate 22 and the packaging bag 10, and can also reduce the phenomena that the first protruding portion 412 extends into the seal region of the packaging bag 10 due to an excessive extension length. As an example, the length L₁ of the negative electrode plate 22 in the first direction X may be 1.01L₁, 1.02L₁, 1.03L₁, 1.04L₁, 1.05L₁, 1.055L₁, 1.058L₁, 1.06L₁, 1.065L₁, 1.07L₁, 1.072L₁, 1.08L₁, 1.085L₁, 1.09L₁, 1.098L₁, 1.1L₁, or a value falling within a range formed by any two thereof.

It is hereby noted that if the first insulation tape 41 is divided into a tape body 411 and a first protruding portion 412, the length of the negative electrode plate 22 in the first direction X mentioned here specifically refers to a distance between an edge of the first protruding portion 412 on one side and an edge of the tape body 411 on one side in the first direction X. If the first insulation tape 41 is divided into a tape body 411, a first protruding portion 412, and a second protruding portion 413, the length of the negative electrode plate 22 in the first direction X mentioned here specifically refers to a distance between an edge of the first protruding portion 412 on one side and an edge of the second protruding portion 413 on one side in the first direction X.

In some embodiments, the first insulation tape 41 includes a substrate layer (not shown in the drawing) and an adhesive layer (not shown in the drawing) disposed on the substrate layer. The substrate layer may be of some mechanical strength, electrical insulativity, and thermal stability, so as to maintain long-term stability when immersed in an electrolyte solution or other environments. The adhesive layer may be of some adhesivity and thermal stability, so as to resist the erosion in an alkaline environment of the electrolyte solution while still being not prone to fall off or shift during use.

The substrate layer includes at least one of polyethylene terephthalate, polyimide, or polypropylene. As an example, the substrate layer is made of polyethylene terephthalate;
The adhesive layer includes at least one of a rubber system, acrylic acid, or styrene-isoprene-styrene. As an example, the adhesive layer is made of styrene-isoprene-styrene.

Referring to FIG. 7 and FIG. 8, and also referring to the example shown in FIG. 6 or FIG. 5, in some embodiments, the first protruding portion 412 may be divided into a first section 412a and a second section 412b that are disposed opposite to each other along the first direction X.

The secondary battery includes a second insulation tape 42. The second insulation tape 42 is roughly U-shaped when viewed from a third direction Z, and includes a first part 421, a second part 422, and a third part 423. Among these parts, the first part 421 is bonded to the first end surface 201, the first section 412a, and the second section 412b separately. In other words, the first part 421 is bonded to the first protruding portion 412 and the end surfaces of the positive electrode plate 24, the negative electrode plate 22, and the separator on one side in the first direction X.

The second part 422 is integrally connected to an edge of the first part 421 on one side along the second direction Y, and is bonded to the first side surface 2031 and the tape body 411 separately. In the second direction Y, the projection of the second part 422 and the projection of the tape body 411 overlap in a first overlap region 431 on the first side surface 2031.

The third part 423 is integrally connected to an edge of the first part 421 on the other side along the second direction Y, and is bonded to the second side surface 2033 and the tape body 411 separately. In the second direction Y, the projection of the third part 423 and the projection of the tape body 411 overlap in a second overlap region 432 on the second side surface 2033.

In the secondary battery involved in this application, the positive electrode plate 24, the negative electrode plate 22, and the separator are bonded together by the second insulation tape 42 and the first insulation tape 41 to form an integral structure, thereby improving the wholeness of the electrode assembly 20, and reducing the risk that at least one of the positive electrode plate 24, the negative electrode plate 22, or the separator is dislocated for lack of constraint under vibration or impact conditions.

On this basis, under a fixing action of the second insulation tape 42, both the first section 412a and the second section 412b can be bent toward an inner turn of the electrode assembly 20, thereby driving the separator to fold inward toward a part of an end surface of the first curved surface 2032 on one side in the first direction X, and in turn, and forming a blocking structure that blocks a part of gas from passing through. In this way, during a hot box test of the secondary battery, a heat-generating gas can rush out of the packaging bag 10 in a centralized manner from a position close to the first tab 31, thereby improving the hot box test pass rate of the secondary battery.

Finally, an overlap region between the second insulation tape 42 and the first insulation tape 41 exists on both the first side surface 2031 and the second side surface 2033, indicating that the thickness in the overlap region in the second direction Y is greater than the thickness in the part around the first curved surface 2032 in the second direction Y. Therefore, in a subsequent hot-pressing process, the force borne in the part around the first curved surface 2032 is less than the force borne in the overlap region. Therefore, the spacing between adjacent electrode plates in the part around the first curved surface 2032 is slightly greater than the spacing between adjacent electrode plates in the overlap region. Therefore, the first curved surface 2032 is more effectively infiltrated by the electrolyte solution, thereby alleviating the phenomenon that the part around the first curved surface 2032 is prone to lithium plating due to insufficiency of the electrolyte solution.

Definitely, the structure of the second insulation tape 42 is not limited to the example given here, and the form of the second insulation tape may be adaptively adjusted according to actual use situation. For example, as shown in FIG. 2, in some other embodiments, the second insulation tape 42 includes just a first part 421. In other words, the second insulation tape 42 assumes a roughly sheet-like structure, and is bonded to the first end surface 201, the first section 412a, and the second section 412b separately. In this way, the overlap region between the second insulation tape 42 and the first insulation tape 41 exists on neither the first side surface 2031 nor the second side surface 2033, thereby no longer serving the function of alleviating the lithium plating in the part around the first curved surface 2032 caused by insufficient electrolyte solution.

It is hereby noted that the second insulation tape 42 is disposed on one side of the electrode assembly 20 in the first direction X, and the width of the second insulation tape 42 in the third direction Z directly affects the infiltration effect in the part around the first curved surface 2032. In other words, the larger the width of the second insulation tape 42 in the third direction Z, the worse the infiltration effect in the part around the first curved surface 2032. Therefore, the width of the second insulation tape 42 in the third direction Z is not recommended to be equal to or greater than the maximum distance from the edge of the second insulation tape 42 on one side near the first tab 31 to the first curved surface 2032.

It is also worth noting that the heat-generating gas can rush out of the packaging bag 10 in a centralized manner from the position near the first tab 31 for the following reasons: for a packaging bag 10 made of an aluminum laminated film, when the same hot-pressing pressure is applied to the first tab 31 and to the seal region adjacent to the first tab 31, because the first metal strap is made of metal and dissipates some heat, the bonding strength of the first tab adhesive is less than the bonding strength in a region other than the first tab adhesive in the seal region. Therefore, in a hot box test, the heat-generating gas can rush out of the packaging bag 10 in a centralized manner from the position near the first tab 31.

In some embodiments, the second insulation tape 42 includes a substrate layer (not shown in the drawing) and an adhesive layer (not shown in the drawing) disposed on the substrate layer. It is hereby noted that the structure and function of the substrate layer of the second insulation tape 42 are similar to those of the substrate layer of the first insulation tape 41, and the structure and function of the adhesive layer of the second insulation tape 42 are similar to those of the first insulation tape 41. Such structures and functions may be learned by referring to the relevant description of the first insulation tape 41, and are not described in detail here.

As shown in FIG. 7 or FIG. 8, in some embodiments, 0.2 < W₁/W ≤ 0.7, and 1 < W₂/W_{tab} ≤ 3. With W₁ and W₂ being controlled to fall within such numerical ranges, this application not only improves the hot box test pass rate of the secondary battery, but also alleviates the lithium plating of the secondary battery. The width of the electrode assembly 20 in the third direction Z is W mm; the width of the first insulation tape 41 in the third direction Z is W₁ mm; the width of the first tab 31 in the third direction Z is W_{tab} mm; and the width of the second insulation tape 42 in the third direction Z is W₂ mm.

Further, 0.3 ≤ W₁/W ≤ 0.5; and/or, 1.5 ≤ W₃/W_{tab} ≤ 2.5. With such design, when W₁ and W₂ satisfies any one of the specified conditions, both the hot box test pass rate of the secondary battery and the no-lithium-plating probability of the negative electrode plate are relatively high.

Still referring to FIG. 7 or FIG. 8, in some embodiments, 0 < W₃/W₁ ≤ 0.5, and 0.8 < W₄/W₃ ≤ 1.1; the width of the first overlap region 431 in the third direction Z is W₃ mm; and the width of the second overlap region 432 in the third direction Z is W₄ mm.

This application is described in more detail below with reference to embodiments and comparative embodiments. Various tests and evaluations are performed by the following methods. In addition, unless otherwise specified, the word "parts" means parts by mass, and the symbol "%" means a percentage by mass. Understandably, such embodiments are merely intended to illustrate this application but not to limit the scope of this application.

### Embodiment 1-1

### Preparing a positive electrode plate

Dissolving a positive active material (lithium cobalt oxide), a conductive agent (conductive carbon black and carbon nanotubes), and a binder (polyvinylidene fluoride) at a mass ratio of 97.5 : 1 : 1.5 in an N-methylpyrrolidone solution to form a positive electrode slurry in which the solid content is 75%. Using aluminum foil as a current collector, applying the positive electrode slurry onto a surface of the positive current collector to obtain a positive active material layer. Subsequently, performing drying, cold-pressing, and cutting to obtain a positive electrode plate.

### Preparing a negative electrode plate

Mixing a negative active material (graphite), a conductive agent (conductive carbon black), a thickener (sodium carboxymethyl cellulose), and a binder (styrene-butadiene rubber) at a mass ratio of 97.5 : 1 : 0.5 : 1, adding deionized water as a solvent, and stirring well to obtain a negative electrode slurry in which the solid content is 50 wt%. Using copper foil as a current collector, applying the negative electrode slurry onto a surface of a negative current collector to obtain a negative active material layer. Subsequently, performing oven-drying, cold-pressing, and cutting to obtain a negative electrode plate.

### Preparing a separator

Using a polyethylene film as a separator.

### Preparing an electrolyte solution

Mixing ethylene carbonate (EC), diethyl carbonate (DEC), propylene carbonate (PC), propyl propionate (PP, and vinylene carbonate (VC) at a mass ratio of 20 : 30 : 20 : 28 : 2 to obtain an organic solvent, and then mixing a fully dried lithium salt LiPF₆ with the organic solvent at a mass ratio of 8 : 92 to obtain an electrolyte solution.

### Preparing a secondary battery

Stacking a first separator, a negative electrode plate, a second separator, and a positive electrode plate in sequence, winding the stacked structure to obtain an electrode assembly, and welding a first tab and a second tab to the electrode assembly. Subsequently, affixing a first insulation tape first, and affixing a second insulation tape to an first end surface, a first section, and a second section separately. Subsequently, affixing the second insulation tape between the first section and the second section of the first insulation tape. Hot-pressing the electrode assembly. Afterward, putting the electrode assembly into a packaging bag made of an aluminum laminated film, extending both a first tab and a second tab out of the packaging bag, drying the packaged electrode assembly, and then injecting an electrolyte solution. Performing steps such as vacuum sealing, static standing, chemical formation, degassing, and edge trimming to obtain a secondary battery that is 80 mm in length, 60 mm in width, and 5 mm in thickness.

Comparative Embodiment 1-1: differs from Embodiment 1-1 in that only the first insulation tape is affixed.

Comparative Embodiment 1-2: differs from Embodiment 1-1 in that only the second insulation tape is affixed.

Comparative Embodiment 1-3: differs from Embodiment 1-1 in that the second insulation tape is affixed to only the first end surface but not to the first section or the second section.

The following describes the test method of each parameter in this application.

### Electrode assembly length test

Disassembling a secondary battery, leaving the battery to stand for 1 hour, and measuring the thickness of the battery with a vernier caliper to obtain the length data of the electrode assembly (the distance between the first end surface and the second end surface in the first direction).

### Electrode assembly width test

Disassembling a secondary battery, leaving the battery to stand for 1 hour, and measuring the thickness of the battery with a vernier caliper to obtain the width data of the electrode assembly (the distance between the first curved surface and the second curved surface in the third direction).

### Electrode assembly thickness test

Disassembling a secondary battery, leaving the battery to stand for 1 hour, and measuring the thickness of the battery with a vernier caliper to obtain the thickness data of the electrode assembly (the distance between the first side surface and the second side surface in the second direction).

### Hot box test

Leaving a secondary battery to stand for 5 minutes at 25 °C, charging the battery at a constant current of 0.5C until the voltage reaches 4.5 V, and then charging the battery at a constant voltage of 4.5 V until the current tapers off to 0.025C. Leaving the battery to stand for 60 minutes, and then performing a hot box test on the secondary battery. Checking the appearance of the secondary battery and taking photos of the battery before the hot box test. Affixing a temperature sensing wire to the battery, and placing the secondary battery vertically in a hot oven. Increasing the temperature from 25 °C to 130 °C at a rate of 5 °C/min, and keeping the temperature for 60 minutes. A secondary battery is considered to pass the test if the secondary battery does not catch fire or explode. Taking 100 secondary batteries as samples for testing. Counting the number of batteries passing the hot box test, and calculating the hot box test pass rate.

### Lithium plating test

Keeping a secondary battery at a 25 °C test temperature for 30 minutes, and then charging the battery to 4.53 V progressively according to the following charging steps:
(1) 4C CC to 4.3 V, CV to 3.2C;
(2) 3.2C CC to 4.35 V, CV to 2.5C;
(3) 2.5C CC to 4.4 V, CV to 2C;
(4) 2C CC to 4.45 V, CV to 1.5C; and
(5) 1.5C CC to 4.53 V, CV to 0.28C.

Leaving the battery to stand for 30 minutes, and then discharging the battery according to the following steps:
(1) 1.5C DC to 3.3 V; and
(2) 0.7C DC to 3 V.

The above charge and discharge process completes one cycle. Repeating the above steps for 700 cycles, and then disassembling the battery that is a fully charged state (the full charged state means that the battery reaches a nominal voltage of 4.53 V) and taking out a negative electrode plate. Determining occurrence of lithium plating if a lithium deposition area on the surface of the negative electrode plate is greater than or equal to 2 mm².

**Table 1**

| Serial number | Is first insulation tape affixed to first curved surface? | Is second insulation tape affixed to first end surface? | Is second insulation tape affixed to first insulation tape at first end surface? | Hot box test pass rate |
|---|---|---|---|---|
| Comparative Embodiment 1-1 | Yes | No | No | 57% |
| Comparative Embodiment 1-2 | No | Yes | No | 61% |
| Comparative Embodiment 1-3 | Yes | Yes | No | 65% |
| Embodiment 1-1 | Yes | Yes | Yes | 78% |

As can be seen from Table 1, in contrast to Comparative Embodiment 1-1, Comparative Embodiment 1-2, Comparative Embodiment 1-3, and Embodiment 1, the hot box test pass rate is relatively high when the second insulation tape is affixed to the first insulation tape at the first end surface. A possible reason is that, under a fixing action of the second insulation tape, both the first section and the second section can be bent toward an inner turn of the electrode assembly, thereby driving the separator to fold inward toward a part of an end surface of the first curved surface on one side in the first direction, and in turn, and forming a blocking structure that blocks a part of gas from passing through. In this way, during a hot box test of the secondary battery, a heat-generating gas can rush out of the packaging bag in a centralized manner from a position close to the first tab, thereby improving the hot box test pass rate of the secondary battery.

### Embodiments 1-2 to 1-18

These embodiments differ from Embodiment 1-1 in the width W₁ of the first insulation tape in the third direction and the width W₂ of the second insulation tape in the third direction. A hot box test and a lithium plating test are performed on each embodiment. The parameters and test results of each embodiment are shown in Table 2.

**Table 2**

| Serial number | W₁ (mm) | W₂ (mm) | W₁/W | W₂/W_{tab} | Hot box test pass rate (%) | No-lithium-plating probability of first curved surface (%) |
|---|---|---|---|---|---|---|
| Embodiment 1-1 | 12 | 7 | 0.2 | 1 | 78 | 71 |
| Embodiment 1-2 | 12 | 12.6 | 0.2 | 1.8 | 81 | 73 |
| Embodiment 1-3 | 18 | 12.6 | 0.3 | 1.8 | 86 | 77 |
| Embodiment 1-4 | 22 | 12.6 | 0.37 | 1.8 | 88 | 79 |
| Embodiment 1-5 | 24 | 12.6 | 0.4 | 1.8 | 85 | 83 |
| Embodiment 1-6 | 30 | 12.6 | 0.5 | 1.8 | 81 | 82 |
| Embodiment 1-7 | 36 | 12.6 | 0.6 | 1.8 | 75 | 79 |
| Embodiment 1-8 | 42 | 12.6 | 0.7 | 1.8 | 73 | 76 |
| Embodiment 1-9 | 48 | 12.6 | 0.8 | 1.8 | 69 | 71 |
| Embodiment 1-10 | 22 | 7 | 0.37 | 1 | 67 | 71 |
| Embodiment 1-11 | 22 | 8.5 | 0.37 | 1.2 | 69 | 73 |
| Embodiment 1-12 | 22 | 10.5 | 0.37 | 1.5 | 74 | 77 |
| Embodiment 1-13 | 22 | 13.5 | 0.37 | 1.9 | 89 | 81 |
| Embodiment 1-14 | 22 | 17 | 0.37 | 2.4 | 91 | 84 |
| Embodiment 1-15 | 22 | 19 | 0.37 | 2.5 | 90 | 83 |
| Embodiment 1-16 | 22 | 21 | 0.37 | 3 | 81 | 82 |
| Embodiment 1-17 | 22 | 28 | 0.37 | 4 | 76 | 77 |
| Embodiment 1-18 | 48 | 2.5 | 0.8 | 3 | 71 | 68 |

As can be seen from Table 2, when the width W₃ of the first overlap region in the third direction is constant, the width W₄ of the second overlap region in the third direction is constant, and the width W₂ of the second insulation tape in the third direction is constant in Embodiments 1-2 to 1-9, Embodiments 1-2 to 1-8 are compared with Embodiments 1-1 and 1-9 to show that when 0.2 < W₁/W ≤ 0.7, the hot box test pass rate of the secondary battery and the no-lithium-plating probability of the first curved surface are both high. Especially when 0.3 ≤ W₁/W ≤ 0.5, the hot box test pass rate of the secondary battery and the no-lithium-plating probability of the first curved surface are even higher.

When the width W₃ of the first overlap region in the third direction is constant, the width W₄ of the second overlap region in the third direction is constant, and the width W₁ of the first insulation tape in the third direction is constant in Embodiments 1-10 to 1-17, Embodiments 1-11 to 1-16 are compared with Embodiments 1-10 and 1-17 to show that when 1 < W₂/W_{tab} ≤ 3, the hot box test pass rate of the secondary battery and the no-lithium-plating probability of the first curved surface are both high. Especially when 1.5 ≤ W₂/W_{tab} ≤ 2.5, the hot box test pass rate of the secondary battery and the no-lithium-plating probability of the first curved surface are even higher. It is worth noting that, as can be seen from Embodiment 1-17, when W₂/W_{tab} is greater than 3, although the hot box test pass rate of the secondary battery and the no-lithium-plating probability of the first curved surface are both high, the second insulation tape is excessively wide and covers a relatively large area of the first end surface, thereby deteriorating the infiltration effect of the electrolyte solution. This area is prone to lithium plating, black flecks, and other problems.

A possible reason is that the positions of the first overlap region and the second overlap region depend not only on the width of the first insulation tape in the third direction, but also on the width of the second insulation tape in the third direction. Specifically, when W₁/W ≤ 0.2 and W₂/W_{tab} ≤ 1, the distance from the first overlap region and the second overlap region to the first curved surface is excessively short, the blocking structure formed by enclosure of the second insulation tape, the first section, and the second section will block the wetting channel in a part, close to the first curved surface, of the first end surface, thereby aggravating the lithium plating at the first curved surface. When W₁/W is greater than 0.7, the function of the blocking structure formed by enclosure of the second insulation tape, the first section, and the second section gradually fails. Consequently, the hot box test pass rate of the secondary battery gradually decreases. When W₂/W_{tab} is greater than 0.7, the second insulation tape covers a relatively large area of the first end surface, thereby deteriorating the infiltration effect of the electrolyte solution in this coverage area, and resulting in lithium plating on the negative electrode plate.

Therefore, W₁ and W₂ satisfy: 0.2 < W₁/W ≤ 0.7, and 1 < W₂/W_{tab} ≤ 3, thereby not only improving the hot box test pass rate of the secondary battery, but also alleviating the lithium plating of the secondary battery.

These embodiments differ from Embodiment 1-1 in the width W₂ of the second insulation tape in the third direction, the width W₃ of the first overlap region in the third direction, and the width W₄ of the second overlap region in the third direction. A hot box test and a lithium plating test are performed on each embodiment. The parameters and test results of each embodiment are shown in Table 3.

**Table 3**

| Serial number | W₁ (mm) | W₃ (mm) | W₄ (mm) | W₃/W₁ | W₄/W₃ | Hot box test pass rate (%) | No-lithium-plating probability of first curved surface (%) |
|---|---|---|---|---|---|---|---|
| Embodiment 1-1 | 12 | 1.2 | 1.2 | 0.1 | 1 | 78 | 71 |
| Embodiment 2-1 | 12 | 2.4 | 2.4 | 0.2 | 1 | 81 | 75 |
| Embodiment 2-2 | 12 | 3.6 | 3.6 | 0.3 | 1 | 83 | 78 |
| Embodiment 2-3 | 12 | 4.8 | 4.8 | 0.4 | 1 | 86 | 81 |
| Embodiment 2-4 | 12 | 6 | 6 | 0.5 | 1 | 85 | 82 |
| Embodiment 2-5 | 12 | 6.5 | 6.5 | 0.55 | 1 | 82 | 69 |
| Embodiment 2-6 | 12 | 3.6 | 2.9 | 0.3 | 0.8 | 81 | 79 |
| Embodiment 2-7 | 12 | 3.6 | 3.2 | 0.3 | 0.9 | 82 | 80 |
| Embodiment 2-8 | 12 | 3.6 | 4 | 0.3 | 1.1 | 83 | 78 |

As can be seen from Table 3, in Embodiments 1-1 and 2-1 versus Embodiments 2-4 and 2-5, when W₃ and W₄ satisfy: 0 < W₃/W₁ ≤ 0.5 and 0.8 < W₄/W₃ ≤ 1.1, the areas of both the first overlap region and the second overlap region fall within specified ranges. In this case, the first insulation tape and the second insulation tape can maintain relatively high bonding strength to keep effectiveness of the function of the blocking structure formed by enclosure of the second insulation tape, the first section, and the second section, and can also alleviate an interface problem generated in a subsequent hot-pressing process due to an area difference between the first overlap region and the second overlap region.

Based on the same technical concept, an embodiment of this application further provides an electronic device. The electronic device contains any one of the above secondary batteries. The electronic device of this application may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, lighting appliance, toy, game console, watch, electric tool, flashlight, camera, large household battery, lithium-ion capacitor, and the like.

Described above are merely some embodiments of this application without limiting the patent scope of this application. Any and or all equivalent structural variations and equivalent process variations made by using the content of the specification and the drawings of this application, and the content hereof used directly or indirectly in any other related technical fields, still fall within the patent protection scope of this application.

## Claims

1. A secondary battery, comprising a packaging bag, an electrode assembly, and a first tab, wherein the electrode assembly is accommodated in the packaging bag, the first tab is electrically connected to the electrode assembly and protrudes out of the packaging bag along a first direction; the electrode assembly assumes a jelly-roll structure and comprises a first end surface, a first side surface, a first curved surface, and a second side surface; and the first side surface, the first curved surface, and the second side surface are disposed around a periphery of the first end surface, **characterized in that**
the secondary battery comprises first insulation tape and second insulation tape;
the first insulation tape comprises a tape body and a first protruding portion, and the tape body is bonded to the first side surface, the first curved surface, and the second side surface separately;
the first protruding portion exceeds a negative electrode plate of the electrode assembly along the first direction, the first protruding portion comprises a first section and a second section, and the first section and the second section are disposed opposite to each other along a second direction, the second direction is perpendicular to the first direction, and the second direction is a thickness direction of the electrode assembly; and
the second insulation tape is bonded to the first end surface, the first section, and the second section separately.

2. The secondary battery according to claim 1, **characterized in that** the second insulation tape comprises a first part, a second part, and a third part;
the first part is bonded to the first end surface, the first section, and the second section separately;
the second part is connected to an edge of the first part on one side along the second direction and is bonded to the first side surface and the tape body separately;
the third part is connected to an edge of the first part on another side along the second direction and is bonded to the second side surface and the tape body separately; and
in the second direction, a projection of the second part and a projection of the tape body overlap in a first overlap region on the first side surface, and a projection of the third part and a projection of the tape body overlap in a second overlap region on the second side surface.

3. The secondary battery according to claim 2, **characterized in that** 0.2 < W₁/W ≤ 0.7, and 1 < W₂/W_{tab} ≤ 3;
a width of the electrode assembly in a third direction is W mm;
a width of the first insulation tape in the third direction is W₁ mm;
a width of the first tab in the third direction is W_{tab} mm; and
a width of the second insulation tape in the third direction is W₂ mm, wherein the third direction, the second direction, and the first direction are perpendicular to each other.

4. The secondary battery according to claim 3, **characterized in that** 0.3 ≤ W₁/W ≤ 0.5; and/or 1.5 ≤ W₂/W_{tab} ≤ 2.5.

5. The secondary battery according to claim 3, **characterized in that** 0 < W₃/W₁ ≤ 0.5, and 0.8 < W₄/W₃ ≤ 1.1;
a width of the first overlap region in the third direction is W₃ mm; and
a width of the second overlap region in the third direction is W₄ mm.

6. The secondary battery according to any one of claims 2 to 5, **characterized in that** the packaging bag is made of an aluminum laminated film;
the electrode assembly comprises the negative electrode plate and a positive electrode plate that are stacked and wound; along a winding direction of the electrode assembly, the positive electrode plate comprises a winding termination end, and the negative electrode plate comprises an excess portion that exceeds the winding termination end; both the excess portion and the winding termination end are located on one side of the electrode assembly in the second direction, and the excess portion and the winding termination end are arranged on two adjacent electrode plate layers; and
along the second direction, an orthographic projection of the excess portion falls within an orthographic projection of the first insulation tape.

7. The secondary battery according to claim 6, **characterized in that** 1 < L₂/L₁ ≤ 1.1;
a length of the negative electrode plate in the first direction is L₁ mm; and
a length of the first insulation tape in the first direction is L₂ mm.

8. The secondary battery according to any one of claims 1 to 5, **characterized in that** the first insulation tape and the second insulation tape each independently comprise a substrate layer and an adhesive layer provided on the substrate layer;
the substrate layer comprises at least one of polyethylene terephthalate, polyimide, or polypropylene; and
the adhesive layer comprises at least one of a rubber system, acrylic acid, or styrene-isoprene-styrene.

9. The secondary battery according to claim 8, **characterized in that** the substrate layer is made of polyethylene terephthalate; and/or
the adhesive layer is made of styrene-isoprene-styrene.

10. The secondary battery according to any one of claims 1 to 9, **characterized in that** the electrode assembly comprises a second end surface; the second end surface is located at another side of the jelly-roll structure along the first direction, and the first end surface is located at one side of the jelly-roll structure along the first direction; and
the first insulation tape comprises a second protruding portion connected to the tape body, and the second protruding portion extends out of the second end surface along the first direction.

11. The secondary battery according to claim 10, **characterized in that** the first end surface or the second end surface is a flat surface or a curved surface.

12. The secondary battery according to any one of claims 1 to 9, **characterized in that** the secondary battery comprises a second tab; one end of the second tab is electrically connected, in the packaging bag, to the electrode assembly, and another end of the second tab protrudes out of the packaging bag.

13. The secondary battery according to claim 12, **characterized in that** both the second tab and the first tab protrude out of the packaging bag from a same side of the electrode assembly.

14. The secondary battery according to any one of claims 1 to 9, **characterized in that** the first tab comprises a first metal strap and a first tab adhesive; one end of the first metal strap is electrically connected, in the packaging bag, to one electrode of the electrode assembly, and another end of the first metal strap protrudes out of the packaging bag; and the first tab adhesive is disposed around a periphery of the first metal strap and is sandwiched between the first metal strap and the packaging bag.

15. An electronic device, **characterized in that** the electronic device comprises the secondary battery according to any one of claims 1 to 14.
